(19) Europäisches Patentamt

European Patent Office

Office européen des brevets

(11) **EP 0 694 327 A2**

(12) **EUROPÄISCHE PATENTANMELDUNG**

(43) Veröffentlichungstag:
31.01.1996 Patentblatt 1996/05

(51) Int. Cl.⁶: **B01D 21/00**, B01D 21/24,
B01D 17/00, B01D 17/02

(21) Anmeldenummer: 95109784.9

(22) Anmeldetag: 23.06.1995

(84) Benannte Vertragsstaaten:
AT BE CH DE ES FR GB IT LI NL SE

(30) Priorität: 27.06.1994 DE 4422361

(71) Anmelder: Lezius, F., Dipl-Ing.
D-80335 München (DE)

(72) Erfinder: Lezius, F., Dipl-Ing.
D-80335 München (DE)

(54) **Verfahren zur Trennung von Gemischen aus Partikeln und/oder Flüssigkeitströpfchen und einem flüssigen oder gasförmigen Trägermedium mittels der unterschiedlichen Kompressibilität der einzelnen Stoffe**

(57) Tröpfchen- und/oder Partikelgemische in Suspensionen. Emulsionen, Aerosolen oder Schwebstäuben werden zur differenzierten Trennung einem unter Über- oder Unterdruck stehenden Apparat zugeführt. Durch den Druck werden die Gemischbestandteile komprimiert bzw. expandiert, wodurch auch Bestandteile absinken bzw. aufsteigen, die bei Normalbedingungen nicht sedimentieren würden. Durch die unterschiedliche Kompressibilität der Gemischbestandteile entstehen Dichteunterschiede, welche die Sinkgeschwindigkeiten derart beeinflussen, daß eine sedimentative Abtrennung einzelner Gemischfraktionen ermöglicht wird. Zur Durchführung wird ein flüssige oder gasförmige Träger- medium (T) über einen Diffusor einem erfindugsgemäßen Apparat zugeführt. Die Gemischbestandteile, die entweder schon vor dem Apparat mit dem Trägermedium vereinigt sind oder separat zugeführt werden, erhalten in Abhängigkeit ihrer Kompressibilität, Masse und Dichte, des Druckes im Apparat und der Viskosität und Strömung des Trägermediums eine charakteristische Sink- oder Auftriebsbeweging, woduch die einzelnen Fraktionen in bestimmten Bereichen sedimentieren und dort gesammelt werden. Die sedimentierten Fraktionen werden über Anschlußflansche abgezogen und durch weitere Trennvorrichtungen von dem Trägermedium separiert.

Fig. 3

EP 0 694 327 A2

**Beschreibung**

**-Verwendete Formelzeichen-**

| | |
|---|---|
| a | : wirkende Beschleunigung |
| $d_p$ | : Partikeldurchmesser |
| $d_{p_o}$ | : Partikeldurchmesser bei Normalbedingungen |
| m | : Masse eines Partikels |
| $v_s$ | : Sinkgeschwindigkeit des Partikels |
| $V_p$ | : Volumen des Partikels |
| $V_o$ | : Volumen des Partikels bei Normalbedingungen |
| $\rho$ | : Dichte der Partikel |
| $\rho_o$ | : Dichte des Partikels bei Normalbedingungen |
| $\rho_T$ | : Dichte des Trägermediums (z.B. Wasser Luft, wässrige Lösung, u.ä.) |
| $\eta$ | : Viskosität des Trägermediums |

**-Beschriebung-**

Die Erfindung betrifft ein Verfahren zur sedimentativen Trennung von Partikeln und/oder Flüssigkeitströpfchen veschieden kompressibler Stoffe, deren Dichten bei Normalbedingungen ähnlich sind und die in Suspensionen, Emulsionen, Aerosolen oder Schwebstäuben gelöst, in Schwebe gehalten oder verstäubt sind. Zu diesem Zweck wird bei der vorliegenden Erfindung der Druck in der Trennvorrichtung so erhöht oder erniedrigt, daß aufgrund der unterschiedlichen Kompressibilität der zu trennenden Komponenten ein für die Trennung durch Sedimentation hinreichend großer Dichteunterschied entsteht.

Vor allem bei der Aufbereitung und beim Recycling von Rest- und Abfallstoffen müssen häufig Materialien ähnlicher Dichte getrennt werden. Beispiele hierfür sind die Trennung verschiedener Kunststoffe und Kunststoffsorten aus Schredderabfällen des Automobil- und Elektonikschrottrecyclings und aus Kunstoffmüllsammlungen, die Trennung von Kunststoff- und Faserbestandteilen beim Recyling von Verbundverpackungen, die Trennung von Fasern mit unterschiedlicher Länge und Verschmutzungsgrad bei der Altpapierverwertung, die Trennung von Syntheseprodukten in der chemischen Industrie und die Trennung von Kunststoffpartikeln aus Bioabfällen bei der Kompostierung oder Vergärung. Häufig möchte oder kann man bei derartigen Problemen keine chemischen Trennverfahren einsetzen, da diese sicherheitstechnische und abfalltechnische Probleme aufwerfen. Daher werden gerne Verfahren eingesetzt, die auf der Sedimentation einzelner Bestanteile beruhen.

Desweiteren muß beim Betrieb von Bioreaktoren Biomasse vom Trägermedium (z.B. Wasser) abgeschieden werden, vitale von nicht vitaler Biomasse getrennt werden (z.B. in der Pharmaproduktion) oder der Auftrieb der Biomasse (z.B. in Schwebbettreaktoren) eingestellt bzw. geregelt werden. Auch hierbei kommen sedimentative Verfahren zum Einsatz.

Bei der Sedimentation beträgt die Sinkgeschwindigkeit der Partikel nach der Gleichung von Stokes:

$$v_s = \frac{(\rho - \rho_T) \cdot d_p^2 \cdot a}{18\eta} \qquad\qquad Gl.\ 1$$

Will man über ein sedimentatives Verfahren eine Fraktion aus einem beliebigen Gemisch abtrennen, so muß die Sinkgeschwindigkeit so eingestellt werden, daß die abzutrennende Fraktion innerhalb einer bestimmten Zeit bzw. Strecke absinkt oder aufschwimmt. Zur Beeinflussung der Sedimentationsgeschwindigkeit wird bei den bekannten Verfahren entweder die wirkende Beschleunigung erhöht (Zyklone, Zentrifugen) oder der Partikeldurchmesser vergrößert (Flokkung). Desweiteren wird vor allem bei Sedimentation in wässrigen Medien die Dichte der Lösung durch Zugabe von Salzen so eingestellt, daß nur eine bestimmte Fraktion absinkt.

Die in der Literatur /Dubbel, Taschenbuch für den Maschinenbau; Vauk/Müller, Grundopperationen chemischer Verfahrenstechnik; Ullmanns Encyklopädie der technischen Chemie, Aufl 4, Bd. 2/ beschriebenen Verfahren zur Sedimentation in Absetzbecken, Absetzkammern, Setzmaschinen, Klassierern und Windsichtern funktionieren nur, wenn der Dichteunterschied der zu trennenden Teilchen und der Dichteunterschied zwischen den Teilchen und dem Trägermedium hinreichend groß ist oder die zu trennenden Teilchen sehr unterschiedliche strömungsmechanische Eigenschaften haben.

In DE 2441811 ist ein Verfahren zur Aufbereitung von gemahlenem Kunststoffrecyklat beschrieben, bei dem durch eine Thermoverdichtung der saubere Kunststoffanteil ein höheres Schüttgewicht erhalten soll als der mit Textil-, Papier- und Holzfaserschnitzel verunreinigte Kunststoffanteil, so daß in einem anschließenden Windsichter die Schwebegeschwindigkeit der sauberen Partikel zunimmt und somit die Trennschärfe verbessert wird. Das Verfahren unterscheidet sich wesentlich von der Erfindung, da das Schüttgewicht des Mahlgutes, nicht aber die Dichte der einzelnen Partikel beeinflußt werden soll. Das Schüttgewicht eines Granulates ist jedoch stärker von der Größe, Form und der Oberflächenbeschaffenheit der Partikel abhängig als von deren Dichte. Die Sedimentation im Windsichter geschieht ohne Überdruck im Anschluß an die Thermoverdichtung. Bei der vorliegenden Erfindung soll hingegen der Druck in der Vorrichtung zur Sedimentation erhöht oder erniedrigt werden, um somit die Dichteunterschiede der zu trennenden Komponenten zu vergrößern. Hierzu ist eine Temperaturerhöhung wie in DE 2441811 nicht notwendig.

Eine Vorrichtung zum Reinigen von Fasersuspensionen ist in DE 2737009 beschrieben. Die Suspension strömt hierbei in horizontaler Richtung durch eine sogenannte Schwebebettkammer, in die von einer unterhalb angeordneten Druckkammer Flüssigkeiten, Gase und/oder Agentien eingeleitet werden. Am Ende der Schwebebettkammer befinden sich verschiedene Abzugsvorrichtungen für die leichten und schweren Verunreinigungen der Faserstoffsuspension. Diese Vorrichtung unterscheidet sich jedoch dadurch von der Erfindung, daß die zu trennenden Bestandteile der Suspension auch bei Normaldruck unterschiedliche Dichten besitzen. Eine Beeinflussung der Dichteverteilung der suspendierten Partikel über die Druckänderung in der Schwebebettkammer wird nicht beschrieben.

Ein Multiphasenseparator in einem druckfesten, liegenden Tank wird in US 4435196 beschrieben. Diese Vorrichtung verfügt jedoch nicht über einen Diffusor zur Einspeisung des Trägermediums und weist keine Vorrichtungen zum Abzug einer Schwebfraktion auf. Außerdem weist die erfindungsgemäße Vorrichtung Sammelbereiche für die Sinkfraktion im unteren Teil auf, aus denen vereinzelte Fraktionen, die durch ihre charakteristische Sedimentationsgeschwindigkeit bzw. Sedimentationsbahn genau in diese Bereiche gesunken sind, abgezogen werden. In US 4435196 findet hingegen lediglich eine Sedimentation über mehrere Absetzkaskaden statt. Gegenüber der US 4435196 besitzt die erfindungsgemäße Vorrichtung den Vorteil, daß durch den Diffusor relativ definierte Strömungsverhältnisse bei der Einspeisung des Trägermediums in den Apparat herschen. Damit kann die Bahn einzelner Partikel oder Tröpfchen kontrolliert ablaufen. Hierdurch wird die Aufgabe einer möglichst selektiven Trennung gelöst.

Der Erfindung liegt die Aufgabe zugrunde, Partikel und/oder Tröpfchen, deren unterschiedliche Materialien unter Normalbedingungen gleiche oder ähnliche Dichten wie andere Gemischbestanteile oder das Trägermedium haben oder bedingt durch andere Effekte (Partikelduchmesser, Strömung im Behälter, Viskosität) nicht absinken bzw. aufsteigen, aus einer Suspension, einer Emulsion, einem Aerosol oder einem Schwebstaub mittels Sedimentation möglichst selektiv abzutrennen.

Hierzu wird ein Verfahren vorgeschlagen, bei dem über den in der Sedimentationsvorrichtung herrschenden Druck die Dichte der kompressiblen Partikel und/oder Tröpfchen so eingestellt wird, daß deren Sink- bzw. Auftriebsgeschwindigkeit für die Abtrennung aus dem Gemisch hinreichend groß wird. Auf diese Weise können durch Sedimentation Partikel und/oder Tröpfchen aus einem mehrphasigen Gemisch abgeschieden werden, die bei Normaldruck nicht absinken oder aufsteigen würden. Außerdem werden infolge des Druckes in der Sedimentationsvorrichtung die Partikel und/oder Tröpfchen verschiedener Materialien eines mehrphasigen Gemisches unterschiedlich stark verdichtet bzw. expandiert, wenn sich die Materialien durch ihre Kompressibilität unterscheiden. Hierdurch wird ein Dichteunterschied erzeugt, der es ermöglicht, verschiedene Bestandteile eines Gemisches, die bei Normaldruck gleiche oder ähnliche Dichten haben, selektiv durch Sedimentation abzutrennen. Von der Theorie her läßt sich dieser Effekt aus der Gleichung von Stokes (Gl. 1) herleiten. Wenn man einen kugelförmigen Partikel mit der Dichte

$$\rho = \frac{m_P}{V} = \frac{\rho_0 \, V_0}{V} \qquad \text{Gl. 2}$$

und dem Kugelvolumen

$$V_0 = \frac{\pi}{6} \, d_{P0}^3 \qquad \text{Gl. 3}$$

betrachtet, ergibt sich die Sinkgeschwindigkeit infolge der Kompression bzw. Expansion zu:

$$v_S = \frac{a}{18\eta} \cdot \left( \rho_0 \, d_{P0}^3 \, \frac{1}{d_P} - \rho_T \, d_P^2 \right) \qquad \text{Gl. 4}$$

Durch Linearisierung über die Taylorentwicklung erhält man aus Gl. 4 bei Vernachlässigung der Viskositätsschwankung die Änderung der Sinkgeschwindigkeit mit der Kompression bzw. Expansion.

$$\frac{\Delta v_S}{v_S} = \frac{-\rho_0 - 2\,\rho_T}{\rho_0 - \rho_T} \cdot \frac{\Delta d_p}{d_{po}} \qquad\qquad Gl.\ 5$$

Kommt es durch Druckerhöhung zu einer Kompression des Partikels, so verringert sich der Partikeldurchmesser (negatives $\Delta d_p$), was nach Gl. 5 zu einer Zunahme der Sinkgeschwindigkeit führt. Umgekehrt erzeugt eine Druckabnahme eine Vergrößerung des Partikeldurchmessers (positives $\Delta d_p$), wodurch nach Gl. 5 die Sinkgeschwindigkeit abnimmt und der Partikel eventuell zu steigen beginnt.

Dieses der Erfindung zugrundeliegende Prinzip ist sowohl auf die Abtrennung von Partikeln und/oder Tröpfchen, die in flüssigen Trägermedien suspendiert oder emulgiert sind, als auch auf Partikel und/oder Tröpfchen, die in einem gasförmigen Trägermedium als Aerosol oder Staub in Schwebe gehalten sind, anwendbar.

Zur Durchführung des Verfahrens nach Anspruch 1 wird das zu trennende Gemisch und ein gasförmiges oder flüssiges Trägermedium in einen Apparat gefördert, in dem ein geeigneter Druck eingestellt wird. Infolge des Druckes entsteht ein Dichteunterschied, der die Bestandteile der einzelnen Fraktionen mit einer charakteristischen Geschwindigkeit in bestimmte Bereiche des Apparates absinken oder aufsteigen läßt. An diesen Stellen befinden sich im Apparat Vorrichtungen (z.B.: Auslaßflasche, Überfallwehre, Rechen o.ä.), über welche die getrennten Fraktionen abgezogen werden können. Je nach Anwendungsfall kann der Druck im Apparat über die das Trägermedium zu- bzw. abführenden Pumpvorrichtungen oder über eine gesonderte Druck- bzw. Vakuumpumpe erzeugt werden.

Zur Aufrechterhaltung des Druckunterschiedes zwischen Umgebung und Apparat müssen an den Zuläufen und Auslässen spezielle Vorrichtungen wie Drosselventile, Schleusenkonstruktionen und/oder Kammerschleusenräder vorgesehen werden, die auch zur Druckregelung verwendet werden können. Drosselventile und Kammerschleusenräder eignen sich dabei eher für einen Apparat, der mit einem konstanten Druck kontinuierlich durchströmt wird, während sich Schleusenkonstruktionen naturgemäß mehr für einen diskontinuierlich oder batchweise betriebenen Apparat eignen.

Da die vereinzelten Gemischfraktionen zusammen mit dem Trägermedium aus dem Apparat abgezogen werden, kann eine anschließende Trennung nötig sein. Hierzu können Zentifugen, Zyklone, Filter o.ä. in bekannter Weise vewendet werden. Das abgetrennte Trägermedium sollte dabei in den Prozeß zurückgeführt werden.

Um die Trennung der Gemischfraktionen zu verbessern, kann der Sink- bzw. Aufstiegsgeschwindigkeit eine horizontale oder vertikale Strömungsgeschwindigkeit überlagert werden. So kann durch eine der Sedimentation entgegengesetzte Strömung eine Klassierung der verschieden Bestandteile des Gemisches erfolgen, durch die Bestandteile mit gleicher Dichte und Kompressibilität aber unterschiedlichen strömungsmechanischen Eigenschaften getrennt werden können. Durch die Überlagerung einer horizontalen Strömung können die Partikel und/oder Tröpfchen zusatzlich gesichtet werden, da Gemischbestandteile mit hoher Sinkgeschwindigkeit in diesem Fall weiniger weit verfrachtet werden als Bestandteile mit geringer Sinkgeschwindigkeit. Die Klassier- und Sichtströmungen sollten in den Apparat so eingebracht werden, daß im Behälter keine zu großen Turbulenzen entstehen, die den Sedimentationsvorgang behindern könnten. Außerdem können Plattensedimentatoren und Lamellen vor und über den Sammelbereichen verhindern, daß Sediment durch die Strömungen wieder aufgewirbelt wird oder Turbulenzen aus dem Auslauf in den Apparat rückwirken.

Beim Einsatz von füssigen Trägermedien in der Sedimentationsvorrichtung läßt sich zusätzlich der hydrostatische Druckgradient der Flüssigkeitssäule ausnutzen, so daß sich abhängig von dem von außen aufgebrachten Druck und der Höhe mehrere Zonen ausbilden, in denen die Materialen mit charakteristischer Kompessibilität und Dichte in Schwebe gehalten werden. Durch geeignete Wahl der Parameter Flüssigkeitssäulenhöhe, Dichte der Flüssigkeit und von außen aufgebrachter Druck lassen sich so Patikel- und/oder Tröpfchengemische mit drei oder mehr Komponenten trennen.

Wird das Partikelgemisch getrennt von dem flüssigen Trägermedium in den Apparat gebracht und möglichst fein und gleichmäßig auf der Flüssigkeitsoberfläche verteilt, so läßt sich durch die Oberflächenspannung ein weiteres Trennkriterium erhalten, da flächige Partikel (z.B. Folienschnipsel) die Phasengrenze an der Flüssigkeitsoberfläche schlechter durchdringen können als kugelige Partikel.

In einer weiteren Ausgestaltung des Verfahrens kann durch wechselnde Drücke auch die Elastizität bzw. Plastizität der Materialien als Trennkriterium herangezogen werden, da elastisch verformte Bestandteile ihre Sedimentationsgeschwindigkeit mit dem Druckwechsels schnell ändern, während plastisch verformte Bestandteile nicht wieder in den ursprünglichen Zustand kommen und sich daher ihre Sedimentationsgeschwindigkeit bei Druckwechsel kaum mehr ändert.

Anwendungsmöglichkeiten des erfindungsgemäßen Prinzips sind auch in der Regelung des Auftriebs von Biomasse in Bioreaktoren zu sehen. Beim Betrieb von biologischen Schwebbettreaktoren (z.B. UASB-Reaktoren) entsteht machmal das Problem, daß mit schwankender Belastung die Partikel (bzw. Granulats oder Schlammflocken) stärker oder schwächer aufsteigen. Somit kommt es zu unerwünschtem Abtrieb von Bestandteilen des Schwebetts. Ein wirkungsvoller Eingriffspunkt zur Steuerung des Auftriebs der Biomasse wäre deren Kompressibilität; bei zu starkem Auftrieb wird der Druck im Reaktor erhöht, wodurch die Partikel verdichtet und somit am weiteren Aufsteigen gehindert werden. Umgekehrt kann ein zu stark absinkendes Schwebbett durch Erzeugung eines Unterdrucks wieder in Schwebe gebracht werden. Auf diese Weise läßt sich die Dicke des Schwebbetts effektiv über den Druck regeln. Bei geschlossenen Bioreaktoren ist es in einer weiteren Ausgestaltung möglich, den für die Regelung nötigen Überdruck Druck von der Biomasse selbst erzeugen zu lassen und den Druck im Reaktor und somit die Dicke des Schwebetts über den Biogasabzug zu steuern. Auch bei biologischen Sequenceing Batch Reaktor Anlagen (SBR = Anlage, bei der Bioabbau und die Sedimentation im zeitlichen Wechsel im selben Behälter stattfinden) kann die Absetzzeit der Biomasse verkürzt werden, indem der Druck im Reaktor erhöht wird; dieses spart letztendlich in der Gesamtanlage Behältervolumen.

Weitere Ausgestaltungen der Erfindung sind Gegenstand der Unteransprüche.

Im folgenden werden Aufbau und Wirkungsweise der Erfindung anhand von Ausführungsbeispielen im einzelnen beschrieben. Dabei zeigt:

Fig. 1 das Verfahrensschema zur Durchführung eines Verfahrens nach Anspruch 1 bis 4 und 6 bis 9 unter Überdruck,
Fig 2 das Verfahrensschema zur Durchführung eines Verfahrens nach Anspruch 1 bis 3 und 7 bis 9 unter Unterdruck,
Fig. 3 den Schnitt durch einen Apparat zur Trennung von Partikel- und/oder Tröpfchengemischen unter Über- oder Unterdruck, bei dem eine horizontale Sichtströmung überlagert wird,
Fig. 4 den Schnitt durch einen Apparat wie in Fig. 3 mit kreisförmigem Grundriß,
Fig. 5 den Schnitt durch einen Apparat zur sedimentativen Trennung von Partikeln und/oder Tröpfchen aus einer Suspension bzw. Emulsion unter Über oder Unterdruck, wobei der Apparat Auslässe für eine Sink-, eine Schwimmfraktion und eine Schwebefraktion besitzt und ein Klassierstrom von unten eingeleitet wird.

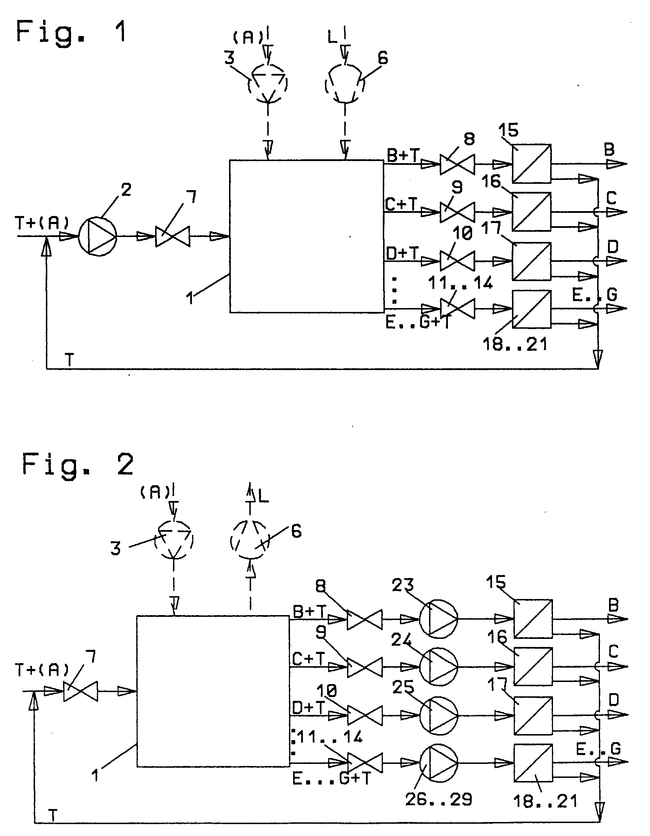

In Fig. 1 wird der unter Überdruck betriebene erfindungsgemäße Apparat (1) von der Pumpvorrichtung (2) mit dem flüssigen oder gasförmigen Trägermedium (T) beschickt. Wird der Apparat (1) gemäß Anspruch 2 betrieben, so sind das Partikel- und/oder Tröpfchengemisch (A) und das Trägermedium (T) bereits vor dem Apparat (1) vereinigt. Zwischen der Pumpvorrichtung (2) und dem Apparat (1) befindet sich das Regel- und Absperrventil (7). Die durch den Apparat (1) erfindungsgemäß vereinzelten Frakionen (B-G) strömen mit dem Trägermedium (T) durch die Drosselventile bzw. Schleusen- oder Schleusenradkonstrukionen (8-14), die zum Abbau der Druckdifferenz benötigt werden, zu den Trennvorrichtungen (15-21), die das Trägermedium (T) von den vereinzelten Frakionen (B-G) abscheiden. Als Trennvorrichtung sind hierbei zum Beispiel Zyklone, Zentrifugen oder Filter einsetzbar. Das abgetrennte Trägermedium wird wieder zur Pumpvorrichtung (2) zurückgeführt. Für die Druckzufuhr gemäß Anspruch 7 kann an den Apparat (1) ein Verdichter bzw. eine Druckluftzufuhr (6) angeschlossen werden; andernfalls wird der Druck über die Pumpvorrichtung (2) erzeugt. Außerdem kann gemäß Anspruch 3 das Gemisch (A) mit der Pumpvorrichtung (3) separat vom Trägermedium (T) in den Apparat gefördert werden.

In Fig. 2 saugt der Unterdruck im erfindungsgemäßen Apparat (1) das Trägermedium, das eventuell schon mit dem Gemischstrom (A) vereinigt ist, durch das Ventil (7) an. Das Ventil (7) dient hierbei dem Erhalt der Druckdifferenz und zum Absperren, wenn der Apparat nach Anspruch 9 batchweise betrieben wird. Die durch den Apparat erfindungsgemäß vereinzelten Fraktionen (B-G) werden mit dem Trägermedium durch die Pumpvorrichtungen (23-29) zu den Trennvorrichtungen (15-21) gefördert, die das Trägermedium (T) von den Fraktionen (B-G) abscheiden. Wie in Fig. 1 sind hierbei als Trennvorrichtung zum Beispiel Zyklone, Zentrifugen oder Filter einsetzbar. Das abgetrennte Trägermedium wird wieder zum Ventil (7) zurückgeführt. Zur Erzeugung des Unterdrucks im Apparat kann gemäß Anspruch 7 eine Vakuumpumpe (6) an den Apparat angeschlossen werden. Andernfalls kann nach Anspruch 6 der Unterdruck auch über die Pumpvorrichtungen (23-29) erzeugt werden, welche die vereinzelten Fraktionen (B-G) aus dem Apparat abziehen. Außerdem kann gemäß Anspruch 5 das Gemisch (A) mit der Pumpvorrichtung (3) separat vom Trägermedium (T) in den Apparat gepumpt werden. Soll das Verfahren nach Anspruch 9 batchweise betrieben werden, so werden zwischen dem Apparat (1) und den Pumpen (23-29 ) Absporrventile (8-14) eingebaut.

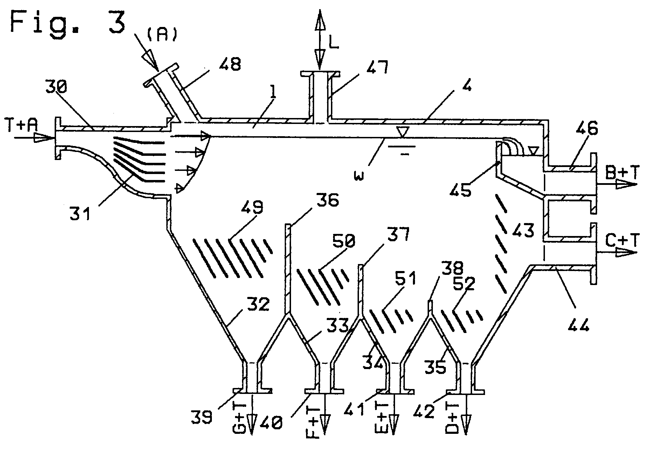

Der in Fig. 3 gezeigte Apparat ist für die Durchführung des Verfahrens nach Anspruch 1 bis 8 geeignet. Der rechteckige Behälter (4) besitzt an der einen Seite einen Anschlußflansch mit Diffusor (30) für das Trägermedium (T), das eventuell nach Anspruch 2 schon mit dem zu trennenden Partikel- und/oder Tröpfchengemisch (A) vereinigt sein kann. Der Diffusor ist so ausgebildet, daß das Trägermedium über die Behälterbreite gesehen gleichmäßig einströmt und die horizontale Strömung über die Höhe betrachtet ein parabolisches und möglichst laminares Geschwindigkeitsprofil hat. Hierzu kann es sinnvoll sein, einen Leitapparat (31) in den Diffusor einzubauen. Der Boden des Behälters besteht aus mehreren Auffangwannen (32-35) für die verschiedenen Sinkfraktionen (D-G), die jeweils mit den Auslaßflanschen (39-42) versehen sind. Zwischen den Auffangwannen befinden sich die Trennwände (36-38), die Querströmungen im unteren Teil des Behälters verhindern und deren Höhen den Schwebebahnen der sedimentierenden Teilchen angepaßt sind. Zusätzlich können noch Plattensedimentatoren (49-52) über den Auffangwannen vorgesehen werden, die ein schnelleres Absinken der Teilchen ermöglichen und verhindern, daß die abgesetzten Bestandteile durch die Querströmung wieder aufgewirbelt werden. An der dem Einlaß gegenüberliegenden Seite sammelt sich die nicht abgesetzte Schwebfraktion (C) in einer Ausbuchtung der Wand (43), die durch die Lamellen (53) vom übrigen Volumen abgetrennt ist. In diesem Bereich befindet sich ebenfalls ein Auslaßflansch (44). Wird der Apparat mit einem flüssigen Trägermedium betrieben, so kann es sinnvoll sein, eine Schwimmfraktion (B) über das Überfallwehr (45) und den Auslaßflansch (46) abzuziehen. Das Überfallwehr (45) und der Auslaßflansch (46) sind in der Regel hinfällig, wenn der Apparat als Schwerkraftwindsichter mit einem gasförmigen Trägermedium betrieben wird. An der Oberseite des Apparates ist ein Flansch (47) für eine Preßluftversorgung (L), einen Verdichter oder eine Vakuumpumpe für die Durchführung des Verfahrens nach Anspruch 7 vorgesehen. Desweiteren befinden sich an der Oberseite des Apparates ein oder mehrere Flanschanschlüsse (48) für die separate Zufuhr des Feststoffgemisches (A) nach Anspruch 3. Diese Anschlüsse sind so ausgeführt, daß das Gemisch gleichmäßig über die Behälterbreite verteilt eingebracht werden kann. Wird das Verfahren mit einem flüssigen Trägermedium betrieben, so ist es in der Regel sinnvoll, über dem Flüssigkeitsspiegel (w) ein Luft- oder Gaspolster (1) zu haben, da dieses Druckschwankungen im Apparat dämpfen kann. Der gezeigte Apparat ist vorzugsweise für die kontinuierliche Betriebsweise nach Anspruch 8 gedacht.

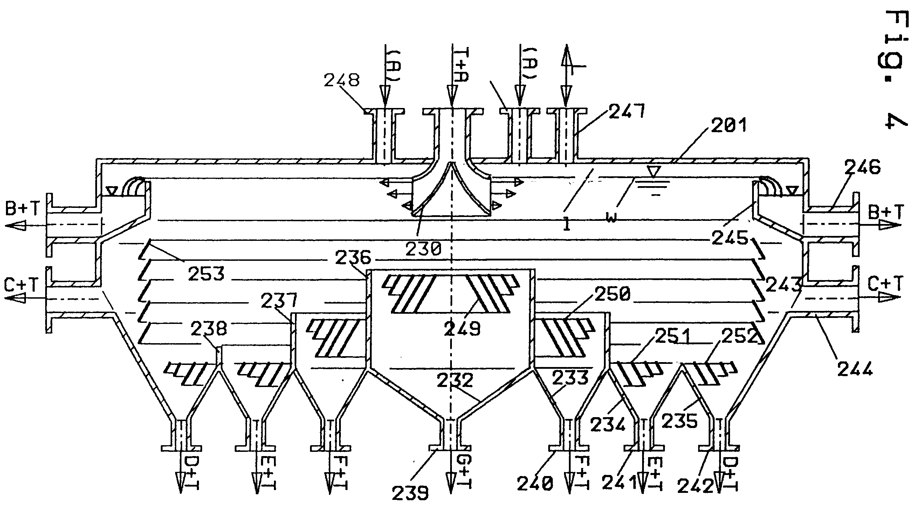

Fig. 4 zeigt einen Apparat nach Anspruch 19 , der aus einem Behälter (201) mit kreisförmigem Grundriß besteht. Der einleitende Diffusor (230) ist hierbei in der Mitte angebracht und soll eine laminare Radialströmung des Trägermediums erzeugen, die nach außen hin naturgemäß abnimmt. Besonders die langsam sinkenden Bestandteile können mit dieser Bauweise in den äußeren Sammelbereichen (234, 235) besser abgesetzt werden. Die einzelnen Sinkfraktionen (D-G) werden in den ring- bzw. kreisförmigen Sammelwannen (232-235) aufgefangen, die eventuell mit Plattensedimentatoren (249-252) überdeckt sind. Die Sammelwannen sind durch die Wände (236-238) abgetrennt, die in der Höhe den Schwebebahnen der einzelnen Fraktionen angepaßt sind. Von den Sammelwannen werden die Sinkfraktionen (D-G) über die Flansche (239-242) abgelassen. Die Schwebfraktion (C) wird in einer Ausbuchtung der Außenwand (243) gesammelt und über die Auslaßflansche (244) abgezogen. Um zu verhindern, daß sich Turbulenzen vom Ausströmen in den Apparat rückwirken, ist der Bereich vor der Ausbuchtung (243) mit den umlaufenden Lamellen (253) von dem übrigen Behälter abgetrennt. Wird das Verfahren und der Apparat mit flüssigem Trägermedium betrieben, so kann über ein rundumlaufendes Überfallwehr (245) die Schwimmfraktion (B) abgeschieden werden, die dann von der Sammelrinne (246) aus über Anschlußflansche abgezogen wird. Beim Betrieb mit gasförmigen Trägermedien wird dieses Überfallwehr in der Regel hinfällig sein. Ansonsten können bei dem Apparat, analog zu dem in Fig. 3 gezeigten, noch ein Anschlußflansch (247) für ein druckerzeugendes Aggregat und der Anschluß (248) für die separate Gemischzufuhr vorgesehen werden. Die Betriebsweise entspricht der des Apparates aus Fig. 3 .

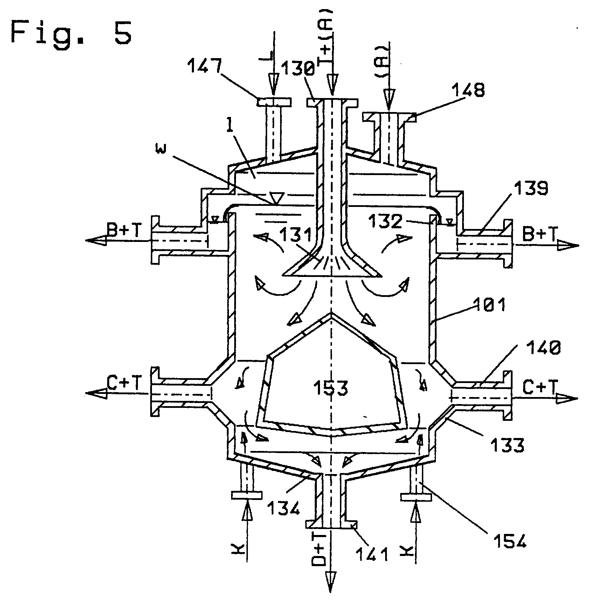

Der in Fig. 5 gezeigte Apparat dient zur Trennung von Partikel- und/oder Tröpfchengemischen (A) in füssigen Trägermedien (T) in eine Schwimmfraktion (B), eine Sinkfraktion (D) und eine Schwebefraktion (C). Der Apparat besteht aus einem Behälter (101) mit kreisförmigem Grundriß. An der Oberseite besitzt der Behälter ein Einlaufrohr (130) mit Flansch, das in den Diffusor mit Leitapparat (131) mündet, der den Behälter unterhalb des Flüssigkeitsspiegels (w) mit dem Trägermedium (T) speist. Nach Anspruch 2 ist das Trägermedium an dieser Stelle eventuell schon mit dem Partikel- und/oder Tröpfchengemisch (A) vereinigt. Für die getrennte Zufuhr des Gemisches (A) nach Anspruch 3 ist der Flansch (148) an der Oberseite des Behälters (101) vorgesehen. Außerdem befindet sich an der Oberseite des Behälters (101) der Anschlußflansch für Preßluft, Verdichter oder Vakuumpumpe nach Anspruch 7. Im oberen Drittel der Behälterwand befindet sich ein rundumlaufendes Überfallwehr (132) für die Schwimmfraktion (B), die von hieraus in die mit mehreren Anschlußflanschen versehene Sammelrinne (139) fließt. Desweiteren befindet sich im unteren Drittel der Behälterwand eine Ausbuchtung (133), von der über mehrere Anschlußflansche (140) die Schwebfraktion (C) abgezogen werden kann. In gleicher Höhe befindet sich in der Mitte des Behälters ein den Strömungsquerschnitt einengender Körper (153). Zur besseren Trennung der Schwebfraktion (C) und der Sinkfraktion (D) kann über die Flansche (154) ein Klassierstrom eingeleitet werden, der die beiden Fraktionen in dem verengten Querschnitt klassiert. Die Sinkfraktion sammelt sich in dem kegelförmigen Boden (134) des Behälters (101) und wird von dort über den Flansch (141) abgelassen.

Für den Betrieb dieses Apparates ist es ebenfalls sinnvoll, wenn sich über dem Flüssigkeitsspiegel (w) ein Luftpolster (1) zur Dämpfung der Druckschwankungen befindet. Grundsätzlich kann dieser Apparat sowohl kontinuierlich nach Anspruch 8 oder diskontinuierlich nach Anspruch 9 betrieben werden, wobei er eher für das letztere geeignet ist.

**Patentansprüche**

1. Verfahren zur Trennung von

   - Gemischen aus Partikeln- und/oder Flüssigkeitströpfchen mit einem gasförmigen oder flüssigen Trägermedium oder von
   - Gemischen aus Partikeln- und/oder Flüssigkeitströpfchen verschiedener Stoffe in einem gasförmigen oder flüssigen Trägermedium,
   wobei die Dichten der Gemischbestandteile bei Normalbedingungen ähnlich denen des Trägermediums oder anderer Gemischbestandteile sind und sich die Kompressibilität der Gemischbestandteile unterscheidet, dadurch gekennzeichnet, daß das Gemisch zusammmen mit einem flüssigen oder gasförmigen Trägermedium einem Apparat zugeführt wird, in dem durch Über- oder Unterdruck der Dichteunterschied der Partikel und/oder Flüssigkeitströpfchen gegenüber anderen Gemischbestandteilen aufgrund der Kompressibilität zunimmt, wodurch

- die Sink- bzw. Aufstiegsgeschwindigkeit von Partikeln oder Flüssigkeitströpfchen zunimmt,
- die Sink- bzw. Aufstiegsgeschwindigkeit von Partikeln oder Flüssigkeitströpfchen regelbar wird,
- die einzelnen Gemischfraktionen verschieden stark sedimentieren,
- die einzelnen Gemischfraktionen sich in ganz bestimmten Bereichen eines Apparates sammeln
- und von diesen Sammelbereichen vereinzelte Gemischfraktionen über getrennte Auslässe abgezogen werden können.

2.	Verfahren nach einem der Anspruch 1 dadurch gekennzeichnet, daß das Gemisch und das Trägermedium bereits vor der Zuführung in den Apparat gemischt sind und als Suspension, Emulsion, Aerosol oder Schwebstaub eingeleitet wird.

3.	Verfahren nach einem der Ansprüche 1 oder 2 dadurch gekennzeichnet, daß das Gemisch und das Trägermedium dem Apparat getrennt zugeführt und erst im Apparat gemischt werden, wodurch bei flüssigen Trägermedien die Oberfächenspannung der Flüssigkeit zusätzlich zur Trennung der Gemischfraktionen beiträgt.

4.	Verfahren nach einem der Ansprüche 1 bis 3 insbesondere zur Trennung von verschiedenen Kunststoffsorten aus gemahlenen Kunststoffabfällen, zur Trennung von Schredderabfällen aus dem Automobil- und Elektronikschrottrecycling, zur Trennung von Syntheseprodukten in der chemischen Industrie, zur Trennung von Kunststoff und organischem Material bei der Naßaufbereitung von Bio- und Restmüll in Kompostier- und Vergärungsanlagen und zur Trennung von Folien und Faserbestandteilen beim Recycling von Verbundverpackungen, dadurch gekennzeichnet, daß bei Drücken zwischen 1,3 und 50 bar gearbeitet wird, wobei der Druck konstant oder wechselnd sein kann.

5.	Verfahren nach einem der Ansprüche 1 bis 4 insbesondere zur Trennung von unterschiedlich stark verschmutzten Zellulosefasern bei der Altpapieraufbereitung, zur Trennung von vitaler und nicht vitaler Biomasse aus Fermentern und zur Trennung von Syntheseprodukten in der chemischen Industrie, dadurch gekennzeichnet, daß bei Unterdrücken gearbeitet wird, bei denen das Trägermedium gerade nicht siedet, wobei der Druck konstant oder wechselnd sein kann.

6.	Verfahren nach einem der Ansprüche 1 bis 5 dadurch gekennzeichnet, daß der Überdruck im Apparat durch die Pumpvorrichtung erzeugt wird, die das Trägermedium zuführt, oder daß der Unterdruck im Apparat durch die Pumpen erzeugt wird, welche die vereinzelten Fraktionen aus dem Apparat abziehen.

7.	Verfahren nach einem der Ansprüche 1 bis 6 dadurch gekennzeichnet, daß der Über- bzw. Unterdruck über ein separates Aggregal erzeugt und über einen getrennten Anschluß zu dem Apparat geführt wird.

8.	Verfahren nach einem der Ansprüche 1 bis 7 dadurch gekennzeichnet, daß der Apparat kontinuierlich durchströmt wird.

9.	Verfahren nach einem der Ansprüche 1 bis 7 dadurch gekennzeichnet, daß das Verfahren batchweise betrieben wird, indem der Apparat zunächst mit dem Trägermedium und dem Gemisch gefüllt wird und dann der Druck angehoben oder abgesenkt wird, wodurch die Gemischbestandteile unterschiedlich sedimentieren und schließlich an verschiedenen Auslässen getrennt abgezogen werden können.

10.	Verfahren nach Anspruch 1 zur Regelung der Sedimentationsgeschwindigkeit bzw. der Dicke eines Schwebbetts in Bioreaktoren dadurch gekennzeichnet, daß über das Stellglied "Druck" die Dichte der Schlammflocken oder Granulats so eingestellt wird, daß die gewünschte Sedimentation bzw. Schwebbettdicke eingestellt wird.

11.	Vorrichtung für die Durchführung des Verfahrens nach einem der Ansprüche 1 bis 9, mit einem geschlossenen, druckfesten Behälter, der mindestens eine Öffnung zum Einspeisen des Trägermediums (T) und des Gemisches (A) aufweist, der im unteren Teil ein oder mehrere Sammelbereiche für die Sinkfraktionen (D-G) hat, aus denen über Auslässe die vereinzelten Gemischfraktionen abgezogen werden können, und an dessen Öffnung zum Einspeisen des Trägermediums ein Diffusor angeordnet ist.

12.	Vorrichtung nach Anspruch 11 dadurch gekennzeichnet, daß in der Seitenwand ein oder mehrere Öffnungen vorgesehen sind, an denen die Schwebfraktionen (C) abgezogen werden.

**13.** Vorrichtung nach Anspruch 11 oder 12 dadurch gekennzeichnet, daß ein Überfallwehr mit ein oder mehreren Auslässen vorgesehen ist.

**14.** Vorrichtung nach einem der Ansprüche 11 bis 13 dadurch gekennzeichnet, daß die Sammelbereiche für die Sinkfraktionen (D-G) trichterförmig gestaltet sind.

**15.** Vorrichtung nach einem der Ansprüche 11 bis 14, die an der Oberseite mit einem Anschluß für das druckerzeugende Aggregat ausgestattet ist.

**16.** Vorrichtung nach einem der Ansprüche 11 bis 15, die an der Oberseite über Anschlüsse und Verteiler für die separate Zufuhr des Gemisches verfügt.

**17.** Vorrichtung nach einem der Ansprüche 11 bis 16, mit unteren oder seitlichen Anschlüssen für Teile des Trägermediums, um der Sedimentation eine horizontale oder vertikale Sichtströmung bzw. Klassierströmung (K) zu überlageren.

**18.** Vorrichtung nach einem der Ansprüche 11 bis 17, bei der Plattensedimentatoren über den am Boden befindlichen Sammelbereichen angebracht sind, wodurch ein schnelles Absinken gefördert und eine Aufwirbelung des Sediments verhindert wird.

**19.** Vorrichtung nach einem der Ansprüche 11 bis 18, dadurch gekennzeichnet, daß der Apparat aus einem kreisförmigen Behälter besteht,

- mit einen in der Mitte gelegenen Diffusor zur Ausbildung einer laminaren Radialströmung des Trägermediums, deren Geschwindigkeit nach außen hin abnimmt,
- mit kreis oder ringförmigen Sammelbereichen für Sink- und Schwebfraktionen (C-G),
- und der gegebenenfalls für den Betrieb mit flüssigen Trägermedien mit einem rundumlaufenden Überfallwehr mit Sammelrinne für die Schwimmfraktion (B) ausgestattet ist.

**20.** Vorrichtung nach einem der Ansprüche 11 bis 19, dadurch gekennzeichnet, daß Räumer bzw. Rechen zur Beförderung sedimentierter oder aufschwimmender Fraktionen zu den jeweiligen Auslässen des Apparates vorhanden sind.

**21.** Vorrichtung nach einem der Ansprüche 11 bis 20, dadurch gekennzeichnet, daß im Überdruckbetrieb an den Auslässen und im Unterdruckbetrieb an den Einlässen des Apparates Drosselventile, Schleusen oder Kammerschleusenräder angebracht sind, um die Druckdifferenz zwischen Apparat und Umgebung abzubauen.

**22.** Vorrichtung nach einem der Ansprüche 11 bis 21, dadurch gekennzeichnet, daß nach den Auslässen des Apparates Zentrifugen, Zyklone oder Filter vorhanden sind um abgezogene Fraktionen vom Trägermedium zu trennen, wobei das Trägermedium wieder in den Prozeß zurückgeführt werden kann.

Fig. 1

Fig. 2

# Fig. 3

Fig. 4

Fig. 5